# EUROPEAN PATENT SPECIFICATION

(11) **EP 3 704 777 B1**
(45) Date of publication and mention of the grant of the patent: **12.06.2024**
(21) Application number: 18796506.6
(22) Date of filing: 15.10.2018
(51) Int. Cl.: H02J 3/38, F02G 5/04, F02B 77/11, F02B 63/04, F01N 3/02, F01N 3/10, F01N 5/02, F01P 9/02, F24D 11/00, F01N 13/00, F01P 3/02, F28D 1/02, F28D 21/00, F28D 20/00, H02K 7/18, F24D 18/00, F24D 101/70, F24D 105/10

(54) **IMPROVED IMMERSION SYSTEM FOR THE COGENERATION OF ENERGY FOR SUPPLYING SMALL-SIZED PERIPHERAL UTILITIES.**
VERBESSERTES IMMERSIONSSYSTEM ZUR KOGENERATION VON ENERGIE ZUR VERSORGUNG KLEINER PERIPHERER VERSORGUNGSEINRICHTUNGEN
SYSTÈME D'IMMERSION AMÉLIORÉ POUR LA COGÉNÉRATION D'ÉNERGIE DESTINÉE À ALIMENTER DES ÉQUIPEMENTS PÉRIPHÉRIQUES DE PETITE TAILLE

(30) Priority: 30.10.2017 IT 201700122951
(43) Date of publication of application: 09.09.2020
(73) Proprietor: A.T.S. Alta Tecnologia Santarcangiolese S.r.l., 47822 Santarcangelo Di Romagna (RN) (IT)
(72) Inventor: NALDI, Fabio, 47822 Santarcangelo Di Romagna (RN) (IT)
(74) Representative: Tiburzi, Andrea
(86) International application number: PCT/IT2018/050195
(87) International publication number: WO 2019/087221

(56) References cited:
- WO-A1-87/03933
- JP-A- H07 119 480
- JP-U- S61 179 355
- US-A- 4 201 523
- US-A- 4 735 061
- US-A1- 2012 312 503

## Description

The present invention relates to an improved immersion system for the cogeneration of energy for supplying small-sized peripheral utilities.

More specifically, the invention relates to a system of the aforementioned type, designed and manufactured in particular for the cogeneration of electrical energy and thermal energy to supply one or more peripheral utilities located in environments, such as heating or cooling systems, water networks and the like, having reduced dimensions.

As is well known currently systems used for energy cogeneration comprise a heat engine, an alternator, a heat recovery device and usually also a control panel for managing the channeling of said heat.

In particular, the thermal engine is supplied with a fuel to supply mechanical energy to the alternator, which, in its turn, produces electrical energy in the form of alternating current.

During normal operation, the engine and the alternator also produce a high amount of heat that is partially recovered.

Generally, the heat is conveyed, through technical water, to users, such as heating systems, heat accumulators and the like.

The control panel is used by a user to adjust and control the heat channeling.

In the known systems, the chemical energy supplied by the fuel to the thermal engine during the combustion process is transformed for about 25% into electrical energy and for about 75% into thermal energy.

Of the 75% of the thermal energy generated, one part is lost by irradiation and another part for failure to completely recover the heat of the exhaust gas, to reach finally, in the best realizations, to a global thermal and electrical efficiency equal to about 80% of the Superior Calorific Power of the fuel introduced into the heat engine.

It is apparent that known cogeneration systems are characterized by a loss of thermal energy, which could instead be recovered and used for other purposes.

A further problem of the known systems is the length of the exhaust system necessary to optimize the power curve of the thermal engine at operating speed.

These lengths can also reach 3 meters, with a noticeable considerable physical encumbrance.

A further problem of the known systems concerns the mechanical noise and the vibrations perceived from the outside during the operation of the systems themselves.

The relevant prior art includes also the patent applications WO 87/03933 A1, US 4201523 A and JP H07119480 A.

In light of the above, it is therefore an object of the present invention to increase the efficiency of the system by recovering most of the available thermal energy.

Another object of the invention is to provide a cogeneration system, which is easy to use and has a reduced size so as to use it also in domestic environments.

A further object of the present invention is to use an expander, which allows to considerably reduce the length of the exhaust system, thus compacting the whole system.

Still another object of the present invention is that of reducing as much as possible the mechanical noise and the vibrations perceivable from the outside during the operation of the system.

It is therefore specific object of the present invention an immersion system for the cogeneration of energy for supplying small-sized peripheral utilities having the features defined in claim 1.

Preferably, said inner tank is coupled to said outer tank by elastic supports, fixed or laying on the bottom of said outer tank.

Advantageously, said inner tank comprises a supporting structure of said thermal engine and alternator, and said supporting structure is coupled to said inner tank by means of anti-vibration elements.

Preferably, an interspace is interposed between said outer tank and said inner tank.

Advantageously, said inner tank comprises a lubrication system, connectable to said thermal engine, comprising a double tank to which a high pressure circuit and a low pressure circuit are connected for feeding said thermal engine through lubrication oil.

Preferably, said third stage comprises a first chamber, in which a first expansion of the gas takes place, with a consequent reduction of the temperature, a second chamber, divided by said first chamber by a diaphragm, fed by two transfer pipes, where there is a second expansion of the gas and a further reduction of the temperature, a silencer with metal braid, for noise reduction, and a connecting tube with the next stage.

Preferably, said fourth stage comprises an expansion and condensation chamber where a third expansion of the exhaust gas of the thermal engine takes place.

The present invention will be now described, for illustrative but not limitative purposes, according to its preferred embodiments, with particular reference to the figures of the enclosed drawings, wherein:
Figure 1 shows a schematic side section view of the improved immersion system for energy cogeneration for feeding small-sized peripheral users, object of the present invention;
Figure 2 shows a side section view of a part of the system object of the present invention;
Figure 3 shows a further side section view of a noise reduction circuit included in the system object of the present invention;
Figure 4 shows a side section view of a detail of the lubrication circuit included in the system object of the present invention;
Figure 5 shows a further side section view of a detail of the system object of the present invention;
Figure 6 shows a front view of a detail of the energy recovery circuit included in the system object of the present invention;
Figure 7 shows a further side section view of the circuit of Figure 6; and
Figures 8A, 8B and 8C show further sectional views of the circuit of Figure 6.

In the various figures similar parts will be indicated by the same reference numbers.

With reference to the enclosed figures, the improved immersion system S for the cogeneration of energy object of the present invention comprises an external containment tank 1 comprising an outer tank 11 and an inner tank 12, separated by an interspace 13 and a first heat exchanger 42, arranged on said inner tank 12.

Said inner tank 12 comprises a thermal engine 2, a second heat exchanger 22, a third heat exchanger 25, an alternator A, axially connected with said thermal engine 2, a lubrication system 3, a cooling circuit 4, a heat energy recovery circuit 6 and an exhaust system that also acts as a noise reduction circuit 9, 10.

Said thermal engine 2 is supplyied at the inlet with a fuel, for generating mechanical energy at the output.

Said mechanical energy is then sent to the input of said alternator, A which generates alternate electric power at the output.

Said thermal engine 2 comprises a pan 21, which contains the lubricating oil necessary for the operation of the thermal engine 2, and a third heat exchanger 25, which contains technical water for cooling the lubricating oil, as will be described in detail below.

Said inner containment tank 12 is partially or completely filled with a fluid F, for example diathermic oil, wherein said thermal engine 2 and alternator A are completely immersed.

Said fluid F is used for the heat exchange, for the reduction of noise and vibrations generated, partly by the pulsations of the walls of the circuits, partly by the vibrations of the alternator A and also by shocks, due to the operation of the internal components of the thermal engine 2.

Said outer tank 11 is insulated on its entire inner surface with a thermal-acoustic insulating material, to reduce the passage of heat and noise towards the outside and it is supported on the ground T on damper pads 111.

Said inner tank 12 is resting on the inner surface of said outer tank 11 by elastic supports 112, fixed or resting on the bottom of said outer tank 11, so that said inner tank 12 can freely oscillate, thus discharging the residual mechanical pulsations of the thermal engine 2 and the mechanical vibrations, specifically on said elastic supports 112.

Said inner tank 12 is provided on the bottom with anti-vibration elements 121, on which a support structure 113 is supported, which supports all the components included in said inner tank 12, so as to provide a first damping of the pulsations of the thermal engine 2.

Said interspace 13 acts both as thermal insulation as well as collection of the fluid F, which could accidentally escape from said inner tank 12.

In case of there is an accidental loss of fluid F, this can be collected outside said outer tank 11 through an outlet conduit 114 regulated by a tap.

Said lubrication system 3 operates separately from the fluid F contained in said containment tank 1 and is suitable for recovering the heat transferred from the thermal engine 2 to the lubricating oil contained in the lubrication system 3.

The thermal engine 2 has a very long uninterrupted operating time, therefore it is necessary to provide a sufficient quantity of lubricating oil and an automatic top-up system.

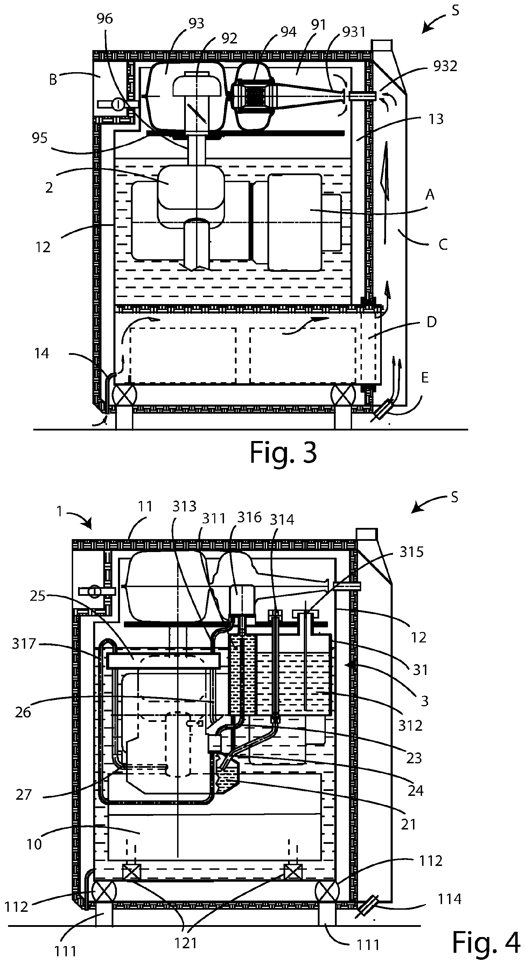

Referring now to Figure 4, said lubricating system 3 comprises a double reservoir 31, to which a high pressure circuit and a low pressure circuit are connected, which allow a long life supply of the oil in said thermal engine 2.

In particular, said double tank 31 comprises a high-pressure chamber 311 to which the high-pressure circuit is connected, and a low-pressure chamber 312 to which the low-pressure circuit is connected.

In particular, said high-pressure chamber 311 contains the lubricating oil to be introduced into the pan 21 of the thermal engine 2.

Said high-pressure circuit comprises inlet and outlet conduits that communicate with said high pressure chamber 311.

A pump, inserted in the thermal engine 2, not shown in the figure, draws the lubricating oil from the pan 21 and sends it to the inlet pipe 317 of said third heat exchanger 25, where it transfers heat to the technical water and cools down.

The so cooled lubricating oil is conveyed into the outlet pipe 313 of said third exchanger 25, to arrive into the filter 316, then into the high-pressure chamber 311 and then re-enter the thermal engine 2 through the inlet pipe 23 of the thermal engine 2.

The presence of the high-pressure chamber 311 makes it possible to increase the amount of lubricating oil circulating in the thermal engine 2 so as to allow less wear of the oil, lower consumption and, therefore, a very long uninterrupted operating time.

In particular, said low pressure chamber 312 contains the reserve lubricating oil and is closed by a control valve 314 for the automatic topping up and for the replacement of the lubricating oil and comprises the oil level control member, comprising, in its turn, the cap 315 with the integrated level control rod.

Said low-pressure circuit comprises inlet and outlet conduits that communicate with said low pressure chamber 312.

In particular, a lubricating oil supply pipe 24 supplies oil to said pan 21.

Said control valve 314 is always normally open and when the oil level in the pan 21 is lowered, said supply pipe 24 remains uncovered.

Since said supply pipe 24 is connected to said hermetically sealed low-pressure chamber 312, when said pipe 24 is uncovered, air enters the pipe 24 and then consequently into said low-pressure chamber 312, so as to let the necessary amount of lubricating oil to raise the level again until the supply pipe 24 has been covered.

In order to replace the lubricating oil, the control valve 314 must be closed so as to avoid, when opening the cap 315, that the reserve oil contained in said low-pressure chamber 312 falls completely inside the pan 21.

The technical water, in turn, arrives from said second exchanger 22 through a pipe 26 to said third exchanger 25 recovers the heat of the lubricating oil and continues through an outlet pipe 27 towards the exhaust system 10, which will be described in detail below.

To make efficient the heat exchange among the fluid F contained in said inner tank 12, the hot walls of the engine 2, the alternator A and the exhaust system 10, it is necessary to pass from the thermal exchange by natural convection to the forced one.

This prevents the fluid F from standing on the walls, creating inhomogeneous areas located in the hottest points, which slow down the passage of heat from the engine 2, the alternator A and the exhaust system 10, to the fluid contained within the inner tank 12.

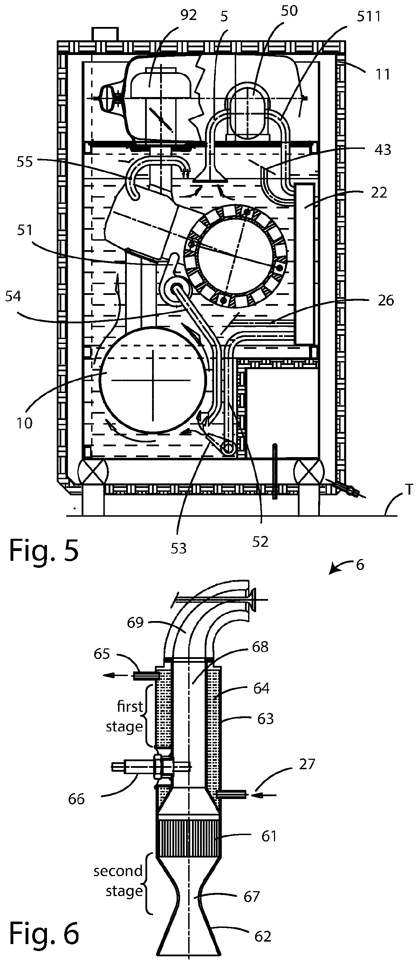

Referring now to Figure 5, to move said fluid F, a handling pump 50 is used, which has the function of sucking the fluid F into the warmer area, by means of a suction or sucking member 5, sending it to said second heat exchanger 22 through a tube 511 and, after having transferred the heat to the technical water, the cooled fluid is sent, through a pipe 52 to a handling diffuser 53 located under the exhaust system 10.

Said diffuser 53 also has the function of forcing the movement of the fluid F, from the bottom to the top, contributing to the improvement of the heat exchange.

The technical water, moved by an external pump, not shown in the figures, arrives at low temperature by the users, and enters through the pipe 40 in the expansion and condensation chamber 41, where it meets said first heat exchanger 42 and continues through an outlet pipe 43 in said second exchanger 22.

The condensate water generated in the expansion and condensation chamber 41 is discharged to the outside through a pipe 44.

In said second exchanger 22, the heat exchange takes place between the heat of the fluid F contained in said inner tank 12 and the technical water.

The path of the technical water continues through said pipe 26 in said third exchanger 25, absorbing the heat of the lubricating oil.

The path continues through the outlet pipe 27 up to the energy recovery circuit 6, where the exhaust gas expansion occurs and, after having partly absorbed the heat, outflow from the S system through a pipe 65 to feed the external users.

In the area of the diffuser 53 there is the float 54 of the handling pump 50, which cools the engine 2.

In particular, said float 54 draws part of the cooler fluid F, which outflows from the handling diffuser 53 and sends said fluid F into the thermal engine 2 and, after having absorbed the heat of the engine, sends it through a pipe 55 in the warmer area where there is the draft of the handling pump 5, above the fluid level F.

As already described, said system S also comprises an energy recovery circuit for the exhaust gas generated by the internal combustion of said thermal engine 2.

The energy contained in the exhaust gases represents the largest fraction of the heat generated by the thermal engine 2, which is about 35% of that introduced.

Said recovery circuit 6 of the energy contained in the exhaust gas, in addition to perform the known functions for reducing noise, pollutants and consumption, also reduces the temperature of the surfaces in contact with the fluid F.

The energy recovery circuit 6 of the exhaust gas comprises four stages.

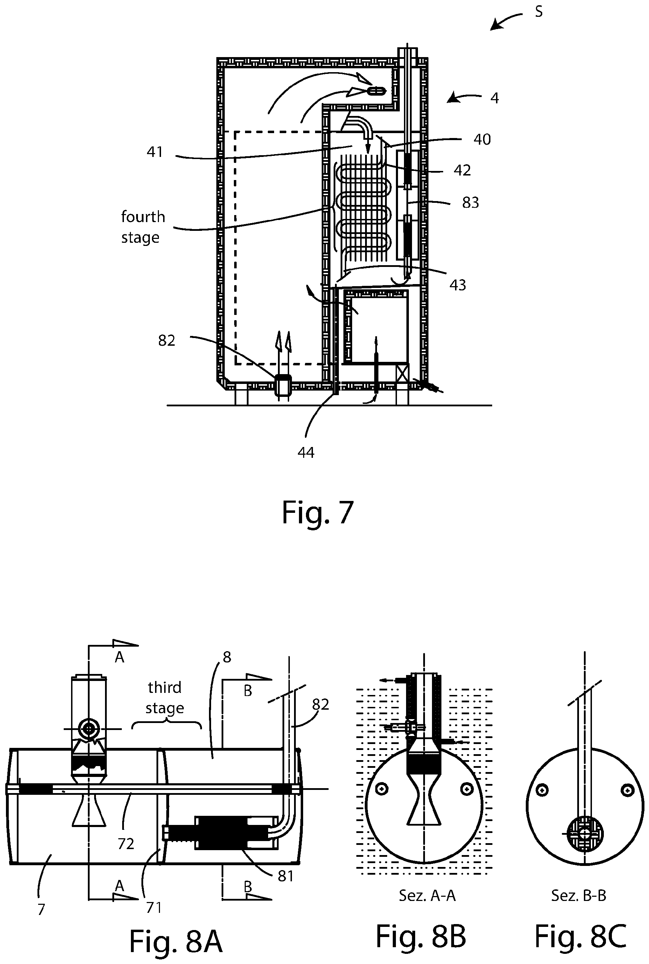

With reference to Figures 6, 7 and 8, the first stage is surrounded by an external wall 63 and an interspace 64, starting from the exhaust collector 69, continues along a primary discharge pipe 68 of the thermal engine 2 up to the entrance of a catalyst 61; the second stage comprises the catalyst 61 and an expander 62; the third stage 10 comprises a double chamber with a primary silencer; the fourth stage comprises the expansion and condensation chamber 41 and the secondary silencer 83.

The first stage is the hottest one and, in order to reduce the temperature of the external wall 63, the technical water is circulated in the interspace 64 which, in addition to the cooling function of the external wall 63, recovers heat to reduce the times of entry into operation of the technical water, which arrives, through the outlet pipe 27 from said third exchanger 25 and leaves the pipe 65 towards the users.

In the first stage the lambda sensor 66 is positioned, which works in a closed circuit with the carburetion control unit, so as to guarantee the operation of the thermal engine 2 at stoichiometric level in all operating conditions, reducing consumptions and emissions.

The second stage comprises the catalyst 61 for reducing the polluting emissions, and the expander 62, which is shaped like a Venturi tube, but with a considerable variation in cross-section.

The gas coming out of the exhaust collector 69, after passing through the primary exhaust pipe 68, arrives at the catalyst 61 and is conveyed into a restriction 67, creating a counter pressure in the first stage and an increase in gas velocity, in order to stabilize the thermal engine 2 at the established operating speed, in this way the length of the primary exhaust pipe 68 is reduced, which otherwise would have a longer greater length, effectively increasing the overall dimensions of the exhaust system.

The gas then reaches the end part of the expander 62, which has a high section increase, which in addition to having an extraction effect, helps to increase the first expansion in the third stage and the temperature reduction.

The third stage comprises a first chamber 7, in which a first expansion of the gas occurs, with a consequent temperature reduction, and a second chamber 8, divided by the first chamber 7 by a diaphragm 71, supplied by two transfer pipes 72, where there is a second expansion of the gas and a further temperature reduction.

Said third stage 10 further comprises a silencer 81 with metallic braid, for the noise reduction, and a connecting tube 82 between the third and fourth stages.

The fourth stage comprises said expansion and condensation chamber 41, where there is a third expansion of the exhaust gas of the thermal engine 2, which arrives from the connecting pipe 82, and in which said first heat exchanger 42 is located, in which the technical water passes, which arrives to the users, moved by an external pump.

During the expansion, the gas in the end part of the exhaust system condenses, releasing the last part of the heat to said first heat exchanger 42.

The exhausted gas comes out through the silencer 83, provided with a metal mesh for reducing the noise.

The expansion and condensation chamber 41 is provided with a drain pipe 44 for the condensate water.

The technical water continues up to the outlet pipe 43 of said first heat exchanger 42 to feed said second heat exchanger 22.

The expansion and condensation chamber 41 also contributes to the reduction of the noise of the thermal engine 2.

Said system S also comprises accessory systems for the operation of said thermal engine 2.

In particular, also referring to Figure 3, in the compartment B the connections are housed, to and from the external users, which also include connections to the fuel with the water system and the electrical system.

The electrical system, the thermal engine management units 2 and the first heat exchanger 42 are housed in the compartment C.

Batteries are housed in compartment D.

Compartments C and D are connected to the wall of the outer tank 11 by means of an inlet nozzle E and a venting and/or supply pipe 14 of the battery compartment D.

These compartments are communicating and form a further chamber that serves to stabilize the pressure waves, reducing their peaks and further lowering the noise.

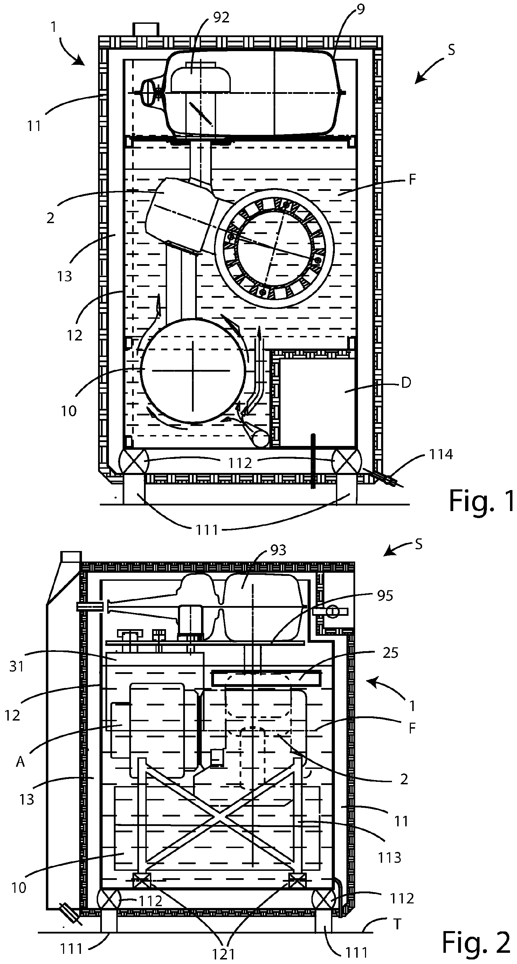

Referring now to Figures 1 and 3, said noise reduction circuit 9 comprises an outer housing 91, a filter box 93, provided with an inlet 931, which communicates with a suitably shaped mouthpiece 932, and an air filter 94.

In the filter box 93, in turn, there is a throttle body or flow meter 92 and a suction collector 96.

The housing 91 is separated from the cooling fluid by an insulated wall 95, which partially insulates it from heat.

The outer housing 91 and the interspace 13 constitute a further volume to be exploited as a Helmholtz resonator, to reduce noise at low frequencies.

The air in the outer housing 91, despite the presence of the insulated wall 95, is very hot, so, in order not to loose power, it is necessary that the thermal engine 2 draws as little as possible.

For this reason, the inlet 931 to the filter box 93 is placed at a certain distance from the inner wall of the inner tank 12 and from the nozzle 932 so as to leave a section, which forms the neck of the resonator of the noise reduction circuit 9.

The mouthpiece 932 transfers the air from the compartment C and from the compartment D, directly into said inlet 931 of said filter 93.

The compartments C and D are supplied by the inlet nozzle E from the vent pipe 14 of the battery compartment, these compartments are communicating and form a further chamber, which serves to stabilize the pressure waves, reducing their peaks, further reducing the noise.

The inlet nozzle E is oriented towards the underlying area of the system S to further attenuate the perceived sound pressure.

The air passage system sucked in from the external environment in the technical compartment C in addition to noise reduction also has the function of decreasing, keeping it stabilized, the temperature of the electrical system, resulting in an increase in the temperature of the drawn air.

This increase is very limited and is of the order of one degree with respect to the room temperature.

The operation of the improved immersion system for the cogeneration of energy for supplying peripheral utilities described above is as follows.

When the system S is set into operation, all the circuits start operating as described above.

The energy contained in the fuel that feeds said thermal engine 2 is transformed part into mechanical-electric energy and part into thermal energy.

The amount of the mechanical-electric energy is a function of said thermal engine 2 and said alternator A type, while the thermal energy derives directly from the part of the fuel, which is not used by said thermal engine 2 and alternator A, in the form of cooling, lubrication, exhaust gas and irradiation, including the heat generated by said alternator A.

The thermal energy generated by said thermal engine 2 is conveyed by said fluid F that acts as a thermal vector.

The energy contained in the final exhaust gas path is almost totally recovered in said expansion and condensation chamber 41 before coming out of said system S.

Adding therefore the mechanical-electrical power, to the recovered thermal one, considering also the small losses due to the necessary exhaust gas outlet and the moderate residual irradiation from said containment tank 1 towards the external environment, the overall efficiency of said system S approaches 100% of the Superior Calorific Power contained in said fuel.

As is clear from the above description, an advantage of the present invention is the possibility, by the use of the fluid as a carrier, of recovering almost all the heat produced by the operation of said entire system S.

Another advantage of the present invention is that of reducing, through the use of said fluid and of the double tank, the acoustic impact of said system S on the external environment wherein it is placed, since there is a reduction of the vibrations and in addition the containment of any fluid leakage from the inner tank.

Another advantage of the present invention resides in the structure of said energy recovery circuit 6, which makes more compact said system S.

A further advantage of the present invention is that of the extension of the times between a maintenance of said system S and the subsequent one.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Immersion system (S) for the cogeneration of energy for supplying small-sized peripheral utilities comprising:
at least one thermal engine (2) suitable to be supplied through a fuel for the production of mechanical energy,
at least one alternator (A), operatively connected to said thermal engine (1) and suitable to receive in input said mechanical energy and to provide electrical energy in output for supplying said peripheral utilities,
an outer container (1) in which said at least one thermal engine (2) and at least one alternator (A) are housed, said system (S) being **characterized**
**in that** said outer container (1) comprises
an inner tank (12) completely or partially filled with a fluid (F) in which said thermal engine (2) and alternator (A) are fully or partially immersed, and
an outer tank (11) to which said inner tank (12) is coupled, wherein said inner tank (12) comprises an energy recovery circuit (6) of the exhaust gas generated by the internal combustion of said thermal engine (2), said energy recovery circuit (6) comprising
a first stage comprising an outer wall (63) and an interspace (64) surrounding a discharge collector (69) and a primary exhaust pipe (68) of said thermal engine (2);
a second stage comprising a catalyst (61) connected to an expander (62) shaped like a Venturi tube positioned downstream of the catalyst (61), the Venturi tube having a first part with a first cross section, a restriction (67) and an end part with an increased cross section;
a third stage (7, 8) comprising a double chamber with a primary silencer; and
a fourth stage comprising an expansion and condensation chamber (41) and a secondary silencer (83).

2. System (S) according to the preceding claim, **characterized in that** said inner tank (12) is coupled to said outer tank (11) by elastic supports (112), fixed or laying on the bottom of said outer tank (11).

3. System (S) according to anyone of the preceding claims, **characterized**
**in that** said inner tank (12) comprises a supporting structure (113) of said thermal engine (2) and alternator (A), and
**in that** said supporting structure (113) is coupled to said inner tank (12) by means of anti-vibration elements (121).

4. System (S) according to anyone of the preceding claims, **characterized in that** an interspace (13) is interposed between said outer tank (11) and said inner tank (12).

5. System (S) according to anyone of the preceding claims, **characterized in that** said inner tank (12) comprises a lubrication system (3), connectable to said thermal engine (2), comprising a double tank (31) to which a high pressure circuit and a low pressure circuit are connected for feeding said thermal engine (2) through lubrication oil.

6. System (S) according to anyone of the preceding claims, **characterized in that** said third stage comprises
a first chamber (7), in which a first expansion of the gas takes place, with a consequent reduction of the temperature,
a second chamber (8), divided by said first chamber (7) by a diaphragm (71), fed by two transfer pipes (72), where there is a second expansion of the gas and a further reduction of the temperature,
a silencer (81) with metal braid, for noise reduction, and a connecting tube (82) with the next stage.

7. System (S) according to anyone of the preceding claims, **characterized in that** said fourth stage comprises an expansion and condensation chamber (41) where a third expansion of the exhaust gas of the thermal engine (2) takes place.

## Patentansprüche

1. Immersionssystem (S) zur Regeneration von Energie zur Versorgung kleiner peripherer Versorgungseinrichtungen, bestehend aus:
mindestens eine Wärmekraftmaschine (2), die zur Erzeugung mechanischer Energie mit einem Brennstoff versorgt werden kann,
mindestens einen Wechselstromgenerator (A), der operativ mit dem Wärmemotor (1) verbunden ist und geeignet ist, am Eingang die mechanische Energie zu empfangen und am Ausgang elektrische Energie zur Versorgung der peripheren Versorgungseinrichtungen bereitzustellen,
einen Außenbehälter (1), in dem die mindestens eine Wärmekraftmaschine (2) und mindestens ein Wechselstromgenerator (A) untergebracht sind, wobei das System (S)
**dadurch gekennzeichnet ist**
**dass** der äußere Behälter (1) Folgendes umfasst
einen Innentank (12), der vollständig oder teilweise mit einer Flüssigkeit (F) gefüllt ist, in die der Wärmemotor (2) und der Generator (A) vollständig oder teilweise eingetaucht sind, und
einen Außentank (11), der mit dem Innentank (12) verbunden ist, wobei der Innentank (12) einen Energierückgewinnungskreislauf (6) des durch die interne Verbrennung des Wärmemotors (2) erzeugten Abgases umfasst Energierückgewinnungsschaltung (6), umfassend
eine erste Stufe, die eine Außenwand (63) und einen Zwischenraum (64) umfasst, der einen Entladungssammler (69) und ein primäres Abgasrohr (68) der Wärmekraftmaschine (2) umgibt;
eine zweite Stufe, die einen Katalysator (61) umfasst, der mit einem Expander (62) verbunden ist, der wie ein Venturirohr geformt ist und stromabwärts des Katalysators (61) angeordnet ist, wobei das Venturirohr einen ersten Teil mit einem ersten Querschnitt, eine Verengung (67) und einen Endteil mit einem vergrößerten Querschnitt aufweist;
eine dritte Stufe (7, 8), die eine Doppelkammer mit einem Primärschalldämpfer umfasst; und
eine vierte Stufe, die eine Expansions- und Kondensationskammer (41) und einen Sekundärschalldämpfer (83) umfasst.

2. System (S) nach dem vorhergehenden Anspruch, **dadurch gekennzeichnet, dass** der Innentank (12) mit dem Außentank (11) über elastische Stützen (112) verbunden ist, die am Boden des Außentanks (11) befestigt oder aufliegend sind.

3. System (S) nach einem der vorhergehenden Ansprüche, **dadurch gekennzeichnet**
**dass** der Innentank (12) eine Stützstruktur (113) des Wärmemotors (2) und des Generators (A) umfasst, und dass die Stützstruktur (113) über Antivibrationselemente (121) mit dem Innentank (12) verbunden ist.

4. System (S) nach einem der vorhergehenden Ansprüche, **dadurch gekennzeichnet, dass** zwischen dem Außentank (11) und dem Innentank (12) ein Zwischenraum (13) liegt.

5. System (S) nach einem der vorhergehenden Ansprüche, **dadurch gekennzeichnet, dass** der Innentank (12) ein Schmiersystem (3) umfasst, das an den Wärmemotor (2) angeschlossen werden kann und einen Doppeltank (31) umfasst, an den a Ein Hochdruckkreis und ein Niederdruckkreis sind zur Speisung des Wärmemotors (2) mit Schmieröl verbunden.

6. System (S) nach einem der vorhergehenden Ansprüche, **dadurch gekennzeichnet, dass** die dritte Stufe umfasst eine erste Kammer (7), in der eine erste Expansion des Gases mit daraus resultierender Temperaturabsenkung stattfindet,
eine zweite Kammer (8), die von der ersten Kammer (7) durch eine Membran (71) getrennt ist und durch zwei Übertragungsrohre (72) gespeist wird, wo es zu einer zweiten Expansion des Gases und einer weiteren Reduzierung der Temperatur kommt,
einem Schalldämpfer (81) mit Metallgeflecht zur Geräuschreduzierung und einem Verbindungsrohr (82) mit der nächsten Stufe.

7. System (S) nach einem der vorhergehenden Ansprüche, **dadurch gekennzeichnet, dass** die vierte Stufe eine Expansions- und Kondensationskammer (41) umfasst, in der eine dritte Expansion des Abgases der Wärmekraftmaschine (2) stattfindet.

## Revendications

1. Système immergé (S) pour la cogénération d'énergie destinée à alimenter des équipements périphériques de petite taille comprenant:
au moins un moteur thermique (2) apte à être alimenté par un carburant pour la production d'énergie mécanique,
au moins un alternateur (A), connecté fonctionnellement audit moteur thermique (1) et adapté pour recevoir en entrée ladite énergie mécanique et pour fournir de l'énergie électrique en sortie pour alimenter lesdits services périphériques,
un conteneur extérieur (1) dans lequel sont logés ledit au moins un moteur thermique (2) et au moins un alternateur (A), ledit système (S) étant **caractérisé en ce que** ledit récipient extérieur (1) comprend un réservoir intérieur (12) totalement ou partiellement rempli d'un fluide (F) dans lequel lesdits moteur thermique (2) et alternateur (A) sont totalement ou partiellement immergés, et
un réservoir externe (11) auquel ledit réservoir interne (12) est couplé, dans lequel ledit réservoir interne (12) comprend un circuit de récupération d'énergie (6) des gaz d'échappement générés par la combustion interne dudit moteur thermique (2), ledit circuit de récupération d'énergie (6) comprenant
un premier étage comprenant une paroi externe (63) et un espace intermédiaire (64) entourant un collecteur de décharge (69) et un tuyau d'échappement primaire (68) dudit moteur thermique (2);
un deuxième étage comprenant un catalyseur (61) relié à un détendeur (62) en forme de tube Venturi positionné en aval du catalyseur (61), le tube Venturi comportant une première partie avec une première section, une restriction (67) et une extrémité partie avec une section transversale augmentée;
un troisième étage (7, 8) comprenant une double chambre avec un silencieux primaire; et
un quatrième étage comprenant une chambre de détente et de condensation (41) et un silencieux secondaire (83).

2. Système (S) selon la revendication précédente, **caractérisé en ce que** ledit réservoir intérieur (12) est couplé audit réservoir extérieur (11) par des supports élastiques (112), fixés ou posés sur le fond dudit réservoir extérieur (11).

3. Système (S) selon l'une quelconque des revendications précédentes, **caractérisé**
**en ce que** ledit réservoir intérieur (12) comprend une structure de support (113) desdits moteur thermique (2) et alternateur (A), et
**en ce que** ladite structure de support (113) est couplée audit réservoir interne (12) au moyen d'éléments anti-vibrations (121).

4. Système (S) selon l'une quelconque des revendications précédentes, **caractérisé en ce qu'**un espace intermédiaire (13) est interposé entre ledit réservoir externe (11) et ledit réservoir interne (12).

5. Système (S) selon l'une quelconque des revendications précédentes, **caractérisé en ce que** ledit réservoir intérieur (12) comprend un système de lubrification (3), connectable audit moteur thermique (2), comprenant un double réservoir (31) auquel un circuit haute pression et un circuit basse pression sont connectés pour alimenter ledit moteur thermique (2) en huile de lubrification.

6. Système (S) selon l'une quelconque des revendications précédentes, **caractérisé en ce que** ledit troisième étage comprend
une première chambre (7), dans laquelle a lieu une première détente du gaz, avec une réduction conséquente de la température,
une deuxième chambre (8), divisée par ladite première chambre (7) par un diaphragme (71), alimentée par deux conduites de transfert (72), où se produit une deuxième détente du gaz et une nouvelle réduction de la température,
un silencieux (81) avec tresse métallique, pour la réduction du bruit, et un tube de liaison (82) avec l'étage suivant.

7. Système (S) selon l'une quelconque des revendications précédentes, **caractérisé en ce que** ledit quatrième étage comprend une chambre de détente et de condensation (41) où s'effectue une troisième détente des gaz d'échappement du moteur thermique (2).
